Europäisches Patentamt

European Patent Office

Office européen des brevets

(19)

(11) Veröffentlichungsnummer: **0 030 349**
**B1**

# (12) EUROPÄISCHE PATENTSCHRIFT

(45) Veröffentlichungstag der Patentschrift:
04.04.84

(21) Anmeldenummer: 80107517.7

(22) Anmeldetag: 02.12.80

(51) Int. Cl.³: **F 16 H 57/06**

(54) **Kupplungsbetätigte Schaltsperre für druckmittelbetätigte Schaltgetriebe, insbesondere für Kraftfahrzeuge.**

(30) Priorität: 06.12.79 DE 2949186

(43) Veröffentlichungstag der Anmeldung:
17.06.81 Patentblatt 81/24

(45) Bekanntmachung des Hinweises auf die Patenterteilung:
04.04.84 Patentblatt 84/14

(84) Benannte Vertragsstaaten:
AT DE FR IT NL SE

(56) Entgegenhaltungen:
DE - A - 1 755 271
DE - A - 2 842 736
FR - A - 794 568
GB - A - 954 825
GB - A - 1 101 525
GB - A - 1 140 984
GB - A - 1 565 139
US - A - 3 248 962

(73) Patentinhaber: **Knorr-Bremse GmbH, Moosacher Strasse 80, D-8000 München 40 (DE)**

(72) Erfinder: **Bestler, Georg, Friedhofstrasse 5, D-8939 Wiedergeltingen (DE)**

## Kupplungsbetätigte Schaltsperre für druckmittelbetätigte Schaltgetriebe, insbesondere für Kraftfahrzeuge

Die Erfindung betrifft eine kupplungsbetätigte Schaltsperre nach dem Gattungsbegriff des Patentanspruches 1.

Aus der FR-A-794 568 ist eine druckmittelbetriebene Schalt- und Kupplungseinrichtung für Kraftfahrzeuge bekannt, welche den im Gattungsbegriff des Patentanspruches 1 erwähnten Merkmalen entspricht und wobei der jeweils einzulegende Getriebegang vorzuwählen ist und erst beim Auskuppeln selbsttätig eingelegt wird. Bei dieser bekannten Einrichtung ist ein mittels des Kupplungspedals betätigbares Schaltventil zum Steuern der Druckmittelbeaufschlagung des Kupplungsnehmerzylinders und eines andererseits federbelasteten Sperrkolbens in einem Steuerventil vorgesehen; das von einem dem einzulegenden Getriebegang entsprechenden, willkürlich einzustellenden Druck ansteuerbare Steuerventil überwacht die Druckmittelzuführung zu das Einlegen des ausgewählten Getriebeganges bewirkenden Schaltzylindern. Bei unbeaufschlagtem Sperrkolben ist das Steuerventil in seiner jeweiligen Schaltstellung verriegelt, so daß es auch bei Änderung des willkürlich einzustellenden Druckes in keine andere Schaltstellung gelangen kann.

Bei dieser bekannten Einrichtung muß, um ein sicheres und vollständiges Auskuppeln vor dem Ausführen eines Gangwechsels zu bewirken, beim Öffnen des Schaltventils sichergestellt sein, daß zuerst der Kupplungsnehmerzylinder die Kupplung vollständig öffnet und nachfolgend der Sperrkolben die Sperre für das Steuerventil löst; diese zeitliche Funktionsreihenfolge ist jedoch nur durch entsprechende Feder- und Kolbenabstimmung am Kupplungsnehmerzylinder und am Sperrkolben einstellbar, sie kann durch Kolben- oder Kupplungsschwergängigkeit und Kupplungsverschleiß gestört werden.

Insbesondere bei Baustellenfahrzeugen unterliegen die Getriebe im allgemeinen einer starken Belastung bei unsachgemäßer Schaltung. Um eine Zerstörung dieser Getriebe — hervorgerufen durch Schaltung des Getriebes bei eingerückter Kupplung — zu verhindern, hat man bisher am Kupplungsgestänge Einrichtungen vorgesehen, welche das Schalten der Getriebe bei eingerückter Kupplung verhindern sollen. Durch Manipulation der Fahrer an diesen Geräten war es jedoch möglich, ohne vollständiges Auskuppeln das Getriebe zu schalten.

Die Aufgabe der Erfindung besteht darin, eine Schaltsperre der eingangs erwähnten Art zu schaffen, welche sicherstellt, daß das Schalten des Getriebes stets nur bei vollständig ausgerückter Eingangskupplung vorgenommen werden kann, das Betätigen der Einkupplungskupplung und das Sperren oder Freigeben des Schaltgetriebes also immer in zeitlich vorbestimmter Folge geschehen, ohne daß es möglich wäre, von außerhalb eine nachteilige Verstellung vornehmen zu können, durch welche die Schaltsperre außer Funktion setzbar sein könnte.

Die Lösung dieser Aufgabe kennzeichnet sich durch die Merkmale nach dem Kennzeichnungsteil des Patentanspruches 1.

Das als Schalteinrichtung vorgesehene, als Drei/Zwei-Wege-Ventil auszubildende Schaltventil ist in baulich einfacher Weise dem Kupplungskraftverstärker zugeordnet, derart, daß es nach Montage nicht mehr von außerhalb einstellbar, also manipulierbar ist. Mittels einer einfachen, am Kolbenrohr des Kupplungskraftverstärkers kraftschlüssig angreifenden Schleppeinrichtung ist das Schaltventil betätigbar, um die Druckmittelzufuhr am Schaltgetriebe erst dann freizugeben, wenn die Kupplung vollständig ausgerückt ist. Dies erweist sich insbesondere von Vorteil, wenn derartige Getriebe für Baustellenfahrzeuge, also Nutzfahrzeuge, eingesetzt werden, welche häufig und damit verhältnismäßig flüchtig geschaltet werden.

Die Konstruktion des Schaltventils ist so ausgelegt, daß die vom Kupplungskraftverstärker aufzubringenden Schleppkräfte sehr klein gehalten sind, was sich positiv auf die Schaltgeschwindigkeit beim Öffnen und Schließen der Druckmittelzuführung für das Schaltgetriebe auswirkt und außerdem zur Folge hat, daß die im Kupplungskraftverstärker vorgesehene, kraftschlüssig am Ventil einwirkende Nachstellvorrichtung nicht zu stark belastet ist. Das Schaltventil ist in koaxialer Erstreckung der Kolbenstange des Kupplungskraftverstärkers ausgerichtet, so daß die Längsbewegungen der mitnehmenden Stange unmittelbar auf den Ventilmechanismus des Schaltventils einzuwirken vermögen. Vorzugsweise sind die Kanalführungen im Kupplungskraftverstärker so gelegt, daß ein gemeinsamer Entlüftungsauslaß sowohl für den Kupplungskraftverstärker als auch für das Schaltventil vorgesehen sein kann.

Das Schaltventil ist für druckmittelbetätigte Getriebe beliebiger Konstruktion verwendbar; es ist für Getriebe einsetzbar, welche eine Druckmittel-Schaltsperre besitzen, es kann auch für Schaltgetriebe pneumatischer oder hydraulischer Wirkungsweise eingesetzt werden, welche durch Druckmittelbeaufschlagung und nicht durch mechanische Einwirkung geschaltet werden. Das Schaltventil ist auch bei Sperreinrichtungen verwendbar, welche im umgekehrten Sinne wirken, derart, daß das Schaltgetriebe im drucklosen Zustand der Sperre betätigt werden kann, während die Druckzufuhr an der Sperre des Schaltgetriebes eine Betätigung desselben verhindert.

Weitere vorteilhafte Ausgestaltungen und Weiterbildungen der kupplungsbetätigten Schaltsperre sind den Unteransprüchen entnehmbar.

Die Erfindung ist nachfolgend anhand eines Ausführungsbeispiels unter Bezugnahme auf die beigefügte Zeichnung erläutert.

Fig. 1 ist eine schematische Ansicht des an einem Kupplungskraftverstärker angeordneten Schaltventils in seiner Zuordnung zum Schaltgetriebe;

Fig. 2 ist eine vergrößerte Schnittansicht des Kupplungskraftverstärkers und des daran befestigten Schaltventils nach der Erfindung;

Fig. 3 ist eine gegenüber Fig. 2 weiterhin vergrößerte Teilschnittansicht unter besonderer Darstellung des Schaltventils in seiner Zuordnung zum Kupplungskraftverstärker.

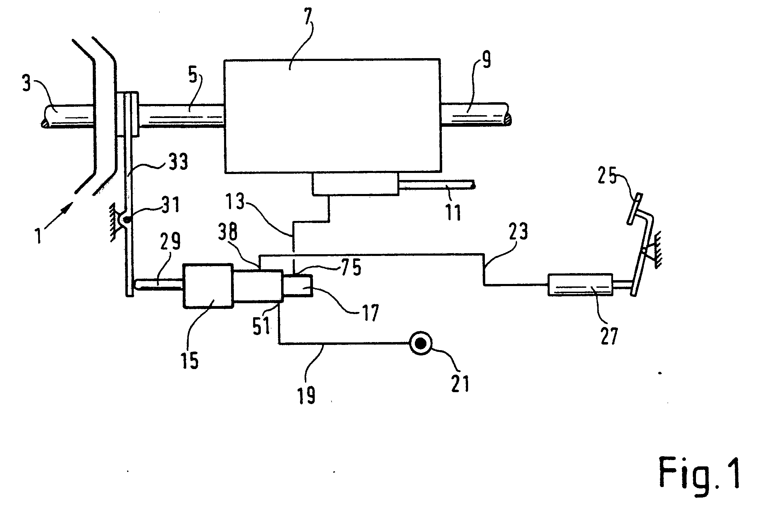

In Fig. 1 der Zeichnung ist eine mit der Schaltsperre nach der Erfindung versehene Getriebeschaltanordnung dargestellt, welche an Kraftfahrzeugen, Arbeitsmaschinen usw. verwendbar ist. Gemäß Darstellung ist eine Eingangskupplung 1 vorgesehen, welche eine mit einem motorischen Antrieb verbundene Welle 3 mit einer Welle 5 zu kuppeln vermag. Die Welle 5 steht mit einem Getriebe 7 in Verbindung, dessen Ausgangswelle 3 mit den Antriebsrädern eines Kraftfahrzeuges oder mit anderen, anzutreibenden Organen verbunden ist.

Das Getriebe 7 kann in beliebiger Weise als Schaltgetriebe mit mehreren Übersetzungsgruppen ausgebildet sein und wird durch ein Schaltgestänge 11 betätigt. Das Schaltgestänge wird gemäß der vorliegenden, nachfolgend im einzelnen erläuterten Erfindung nur dann wirksam, wenn die in Fig. 1 dargestellte Leitung 13 mit Druckmittel, so mit Druckluft, versorgt ist.

Dem Getriebe ist eine Baueinheit — bestehend aus Kupplungskraftverstärker 15 und Schaltventil 17 — zugeordnet. Das Schaltventil ist über eine Leitung 19 an einen Druckluftvorrat 21 angeschlossen. In den Kupplungskraftverstärker mündet eine Leitung 23, welche an einen durch ein Kupplungspedal 25 betätigbaren Geberzylinder 27 angeschlossen ist. Aus dem in der Darstellung linken Ende des Kupplungskraftverstärkers 15 erstreckt sich eine Kolbenstange 29, welche auf das Ende eines um einen Zapfen 31 verschwenkbaren Kupplungshebels 33 einwirkt. Der Kupplungshebel 33 wirkt über einen Bügel auf die Kupplung 1 ein, derart, daß bei einer gemäß Darstellung gegen den Uhrzeigersinn gerichteten Verschwenkung des Kupplungshebels 33 die Kupplung 1 eingerückt wird.

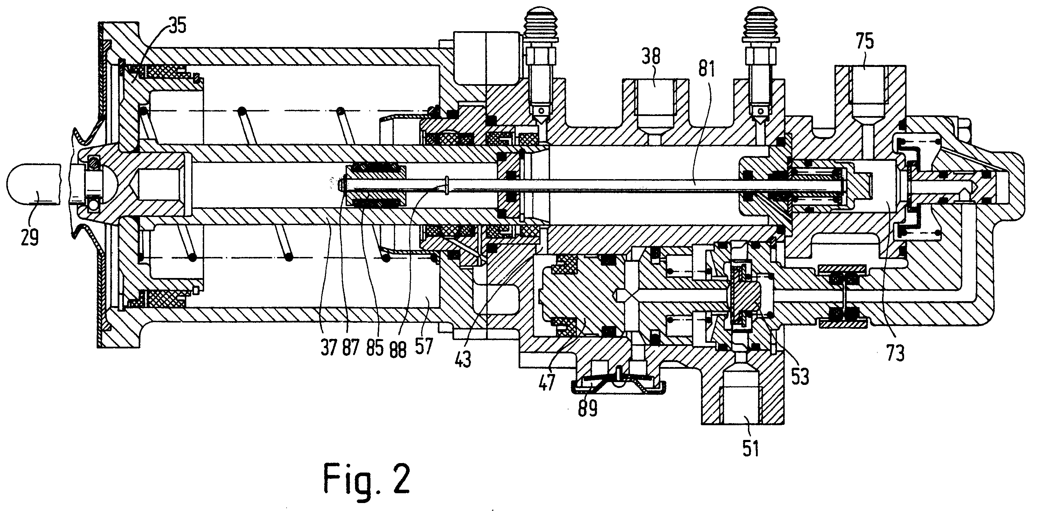

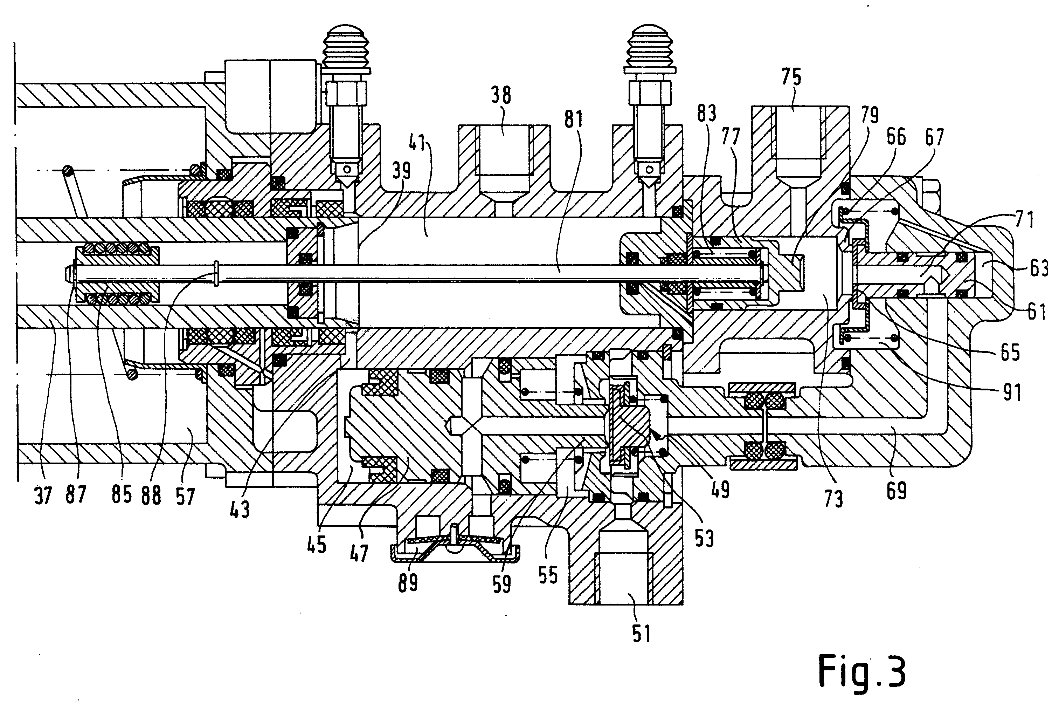

In Fig. 2 ist das Schaltventil 17 in seiner Zuordnung zum Kupplungskraftverstärker 15 im einzelnen dargestellt. In Verlängerung der Kolbenstange 29 ist im Inneren des Kupplungskraftverstärkers ein Pneumatikkolben 35 vorgesehen, der mit einem Kolbenrohr 37 in Verbindung ist. Am gemäß Darstellung rechten Ende ist durch Dichtungselemente abgesichert eine Kolbenfläche 39 (Fig. 3) gebildet, welche in nachfolgend beschriebener Weise hydraulisch beaufschlagbar ist. Wird das Kupplungspedal 25 betätigt, so wird proportional hierzu vom Geberzylinder 27 ein hydraulischer Druck erzeugt, der über die Leitung 23 und den Anschluß 38 in den Hydraulikraum 41 gelangt und an der Kolbenfläche 39 zur Wirkung kommt. Gleichzeitig strömt die unter Druck stehende Hydraulikflüssigkeit über die Verbindungsbohrung 43 in einen weiteren Hydraulikraum 45 ein und beaufschlagt hier die Rückseite eines Steuerkolbens 47, der zur Betätigung eines Steuerventils 49 dient. Mit dem Steuerventil 49 ist ein Anschluß 51 verbunden, welcher an den vorstehend beschriebenen Druckluftvorrat 21 angeschlossen ist. Das Steuerventil 49 ist in Fig. 2 und 3 der Zeichnung in geöffneter Lage dargestellt, welche besteht, wenn die Kolbenstange 29 des Kupplungskraftverstärkers zum Zwecke der Beaufschlagung des Kupplungshebels 33 ausgefahren wird. In dieser Position liegt der durch den Druck im Hydraulikraum 45 beaufschlagte Steuerkolben 47 an einem Ventilteller 53 an, wodurch eine freie Verbindung zwischen dem Anschluß 51 und der die Verlängerung des Steuerkolbens 47 aufnehmenden Steuerkammer 55 besteht. Die Steuerkammer 55 ist über eine (nicht dargestellte) Leitungsverbindung mit der das Kolbenrohr 37 umgebenden Kammer 57 verbunden. Die Druckluft aus der Steuerkammer 55 kann demnach innerhalb der Kammer 57 zur Wirkung gelangen, wodurch der Pneumatikkolben 35 und die mit ihm verbundene Kolbenstange 29 in vorstehend beschriebener Weise verschoben werden. Die aufgezeigte Tandemanordnung ergibt an der Kolbenstange 29 eine Summierung der Kräfte, hervorgerufen durch die pneumatische Druckbeaufschlagung des Pneumatikkolbens 35 und die hydraulische Druckbeaufschlagung der Kolbenfläche 39.

Das in der Darstellung am Kupplungskraftverstärker 15 koaxial angeordnete Schaltventil 17 weist einen Schaltkolben 61 auf, der unter Abdichtung in einer Bohrung 63 verschiebbar ist und welcher an seinem gemäß Darstellung nach Fig. 2 und 3 linken Ende einen Ventilteller 65 trägt. Der Ventilteller 65 befindet sich gemäß Darstellung unter Verspannung durch eine Feder 66 in Anlage an einem Ventilsitz 67, wodurch eine Druckmittelverbindung vom Anschluß 51 über den Kanal 69, den weiteren, im Schaltkolben 61 befindlichen Kanal 71 und eine Kammer 73 zu dem mit der Leitung 13 in Verbindung stehenden Anschluß 75 besteht, derart, daß die Leitung 13 in der Darstellung nach Fig. 2 und 3 mit Druckluft versorgt ist. In diesem Zustand besteht Druckbeaufschlagung der dem Getriebe 7 zugeordneten und das Schaltgestänge 11 sperrenden Einrichtung, so daß das Schaltgestänge bei ausgerückter Kupplung 1 (Fig. 1) nunmehr zum Zwecke eines Getriebewechsels betätigt werden kann.

Innerhalb der Kammer 73 ist unter Abdichtung seines Außenumfanges ein Kolben 77 verschiebbar, welcher an seinem gemäß Darstellung rechten Ende einen Einlaßventilsitz 79 trägt. Der Kolben 77 umgibt ein Ende einer Stange 81, welche durch eine im Inneren des Kolbens 77 geführte Feder 83 und einen mit der Stange 81 verbundenen Mitnehmer nach rechts verspannt wird, also in Richtung des Schaltkolbens 61. Die Stange 81 erstreckt sich unter Abdichtung durch den sogenannten Hydraulikraum 41 des Kupplungskraftverstärkers, wobei sich das linke Ende, innerhalb des Kolbenrohrs 37 befindlich, in Eingriff mit einer Mitnahmeeinrichtung 85 bewegen läßt. Die Mitnahmeeinrichtung 85 ist als eine Traghülse mit einer die Traghülse umgebenden, sich gegenüber der Innenwandung des Kolbenrohrs 37 verspreizenden Schraubenfeder dargestellt. Die Mitnahmeeinrichtung 85 weist somit Reibungsschluß gegenüber dem Kolbenrohr 37 auf und vermag bei Bewegung des Kolbenrohres 37 gegenüber dem Anschlag 87 der Stange 81 zu wirken, um diese mitzunehmen. Wird das Kolbenrohr 37 in vorstehend beschriebener Weise durch Beaufschlagung des Pneumatikkolbens 35 als auch durch Beaufschlagung der Kolbenfläche 39 verschoben, dann legt sich die in seinem Inneren befindliche Mitnahmeeinrichtung 85 nach einer gewissen Wegstrecke an den Anschlag 87 der Stange 81 an, so daß die Stange 81 bei weiterer Bewegung des Kolbenrohres 37 gleichfalls gemäß Darstellung nach Fig. 2 und 3 nach links gerichtet bewegt wird. Die Stange 81, deren rechtes Ende in der (nicht dargestellten) den Anschluß 75 sperrenden Position, unterstützt durch die Feder 83, den Kolben 77 mit seinem Einlaßventilsitz 79 gegen den Ventilteller 65 dichtend andrückt, wird von der Mitnahmeeinrichtung 85 im Verlaufe der vorbeschriebenen Mitnahmebewegung um eine vorbestimmte Wegstrecke, entsprechend dem Betätigungshub der Kolbenstange 29 bis zu der dargestellten Lage nach Fig. 2 und 3 mitgenommen, so daß die in dem Kanal 71 anstehende Druckluft während der nach links gerichteten Verschiebung der Stange 81 den Kolben 77 gleichfalls nach links gerichtet zu verschieben vermag. Dadurch wird der Einlaßventilsitz 79 in die in Fig. 2 und 3 veranschaulichte Position gebracht.

Vorstehend ist zum Ausdruck gebracht, daß die Stange 81 bei der gemäß Fig. 2 und 3 nach links gerichteten Verschiebung des Kolbenrohrs 37 mitgenommen wird und somit das Schaltventil 17 in die dargestellte Position bringt, da sich die im Reibeingriff mit dem Kolbenrohr 37 befindliche Mitnahmeeinrichtung 85 nach einer gewissen Wegstrecke an den Anschlag 87 am linken Ende der Stange 81 anlegt und diese gegen die Verspannung der Feder 83 mitnimmt, derart, daß der Kolben 77 durch die im Kanal 71 anstehende Druckluft nach links verschoben wird und somit die Verbindung zwischen dem Kanal 71 und dem Anschluß 75 hergestellt wird. Die Öffnungsbewegung des Kolbens 77 vollzieht sich demnach durch Druckbeaufschlagung, d. h., daß die Mitnahmeeinrichtung 85 nicht zu stark belastet ist.

Ist die Getriebeschaltgruppe bzw. der einzelne Gang des Getriebes 7 während der Position der einzelnen Teile nach den Fig. 1—3 geschaltet worden, dann kann nachfolgend eingekuppelt werden, d. h., daß die Bedienungsperson den Fuß vom Kupplungspedal 25 nimmt. Hierdurch werden der hydraulische Druck des Geberzylinders 27, welcher im Hydraulikraum 41 und im Hydraulikraum 45 zur Wirkung kommt, als auch der pneumatische Druck innerhalb der Kammer 57 abgebaut. Die Kupplung 1 wird durch (nicht dargestellte) rückstellende Federeinrichtungen oder dergleichen selbsttätig wieder eingerückt, wobei der Kupplungshebel 33 eine gegen den Uhrzeigersinn gerichtete (nach Fig. 1) Schwenkbewegung vollführt und dadurch die Kolbenstange 29 gemäß Darstellung von links nach rechts verschiebt. Die Bewegung des Kolbenrohrs 37 ist im gleichen Sinne gegenläufig, d. h. von links nach rechts gerichtet, so daß sich die Mitnahmeeinrichtung 85 nach einer gewissen Wegstrecke an den weiteren Anschlag 88 an der Stange 81 anlegt und beginnt, die Stange 81 mitzunehmen. Ausgehend von der in Fig. 2 und 3 dargestellten Position verschiebt das rechte Ende der Stange 81 den Kolben 77, unterstützt durch die Feder 83, bis der Kolben mit seinem Einlaßventilsitz 79 dichtend an den Ventilteller 65 angelegt ist und die Verbindung zwischen dem Kanal 71 und dem Anschluß 75 gesperrt wird. Der Kolben 77 bewegt sich um eine weitere Wegstrecke und hebt dadurch den Ventilteller 65 vom Ventilsitz 87 ab, derart, daß der Anschluß 75 mit der die Feder 66 aufnehmenden Kammer 91 in Verbindung gelangt. Die Kammer 91 steht über (nicht dargestellte) Leitungsverbindungen mit dem Anschluß 89 in Verbindung, d. h. die Kammer 91 entlüftet über den Anschluß 89. In entsprechender Weise wird der nunmehr mit der Kammer 91 in Verbindung stehende Anschluß 75 über die (nicht dargestellte) Leitungsverbindung zum Anschluß 89 entlüftet, die Leitung 13 ist somit drucklos und das Schaltgestänge 11 kann infolgedessen bei gleichzeitig eingerückter Kupplung nicht mehr betätigt werden. Eine Zerstörung der einzelnen Schaltgruppen oder einzelnen Gänge des Getriebes ist dadurch absolut sicher ausgeschlossen.

Der zum Entlüften dienende Anschluß 89 dient gleichzeitig zur Entlüftung der Steuerkammer 55, wenn sich der Steuerkolben 47 bei drucklosem Hydraulikraum 45 unter der Verspannung der dargestellten Rückstellfeder nach links gerichtet verschiebt und sich dadurch die Verlängerung 59 des Steuerkolbens 47 vom Ventilteller 53 löst und sich der Ventilteller 53 seinerseits unter Verspannung einer Feder dichtend an den im zugewandten gehäusefesten Ventilsitz anlegt.

Bezugszeichenliste

  1 Kupplung
  3 Welle
  5 Welle
  7 Getriebe
  9 Ausgangswelle
11 Schaltgestänge
13 Leitung
15 Kupplungskraftverstärker
17 Schaltventil
19 Leitung
21 Druckluftvorrat
23 Leitung
25 Kupplungspedal
27 Geberzylinder

29 Kolbenstange
31 Zapfen
33 Kupplungshebel
35 Pneumatikkolben
37 Kolbenrohr
38 Anschluß
39 Kolbenfläche
41 Hydraulikraum
43 Verbindungsbohrung
45 Hydraulikraum
47 Steuerkolben
49 Steuerventil
51 Anschluß
53 Ventilteller
55 Steuerkammer
57 Kammer
59 Verlängerung
61 Schaltkolben
63 Bohrung
65 Ventilteller
66 Feder
67 Ventilsitz
69 Kanal
71 Kanal
73 Kammer
75 Anschluß
77 Kolben
79 Einlaßventilsitz
81 Stange
83 Feder
85 Mitnahmeeinrichtung
87 Anschlag
88 Anschlag
89 Anschluß
91 Kammer

**Patentansprüche**

1. Kupplungsbetätigte Schaltsperre für druckmittelbetätigte Schaltgetriebe (7), insbesondere für Kraftfahrzeuge, mit einem bei Betätigung eines Kupplungspedals (25) wirkenden Kupplungsnehmerzylinder, vorzugsweise Kupplungskraftverstärker (15), zum Einrücken und Ausrücken einer dem druckmittelabhängig betätigbaren Schaltgetriebe (7) zugeordneten Eingangskupplung (1) und einer durch den Kupplungskraftverstärker (15) betätigbaren Schalteinrichtung, welche die Druckmittelzufuhr zur Schaltsperre kupplungsabhängig derart steuert, daß ein Gangwechsel nur bei vollständig ausgerückter Kupplung möglich ist, dadurch gekennzeichnet, daß die Schalteinrichtung aus einem Schaltventil (17) besteht, welches in axialer Verlängerung der Kolbenstange (29) des Kupplungskraftverstärkers (15) angeordnet ist, und daß eine reibschlüssige Mitnehmereinrichtung (81, 85) die Kolbenstange (29) mit dem Schaltventil (17) verbindet, derart, daß das Schaltventil in Abhängigkeit von den Bewegungen der Kolbenstange (29) die Druckmittelzufuhr zur Schaltsperre steuert.

2. Kupplungsbetätigte Schaltsperre nach Anspruch 1, dadurch gekennzeichnet, daß die Kolbenstange (29) mit einem im Inneren des Kupplungskraftverstärkers verschiebbar angeordneten Kolbenrohr (37) verbunden ist, welches mittels der Mitnahmeeinrichtung (85) mit einer axial sich in Richtung des Schaltventils erstreckenden Stange (81) verbunden ist, und daß die Stange (81) in Abhängigkeit von den Bewegungen der Kolbenstange (29) auf das Schaltventil (17) zu dessen Steuerung einwirkt.

3. Kupplungsbetätigte Schaltsperre nach Anspruch 1 oder 2, dadurch gekennzeichnet, daß sich die Stange (81) unter Abdichtung durch einen mit einem Kupplungs-Geberzylinder (27) verbundenen Raum (Hydraulikraum (41)) des Kupplungskraftverstärkers (15) erstreckt, mit dem der Kolbenstange (29) zugeordneten Ende innerhalb des gegenüber des Hydraulikraums (41) abgedichteten Kolbenrohres (37) endet, wobei die Mitnahmeeinrichtung (85) als eine das Ende mit der Innenseite des Kolbenrohrs (37) verbindende Rutschkupplung ausgebildet ist, und daß das entgegengesetzte Ende der Stange (81), gleichfalls gegenüber dem Hydraulikraum (41) abgedichtet, auf einen wegabhängig einen Einlaßventilsitz (79) des Schaltventils (17) in geöffnete oder geschlossene Lage bewegenden Kolben (77) einwirkt.

4. Kupplungsbetätigte Schaltsperre nach Anspruch 3, dadurch gekennzeichnet, daß die Mitnahmeeinrichtung (85) als Nachstelleinrichtung der Kupplung (1) wirkend zwischen einem am Ende der Stange (81) angeordneten Anschlag (87) und einem weiteren, die Mitnahmebewegung des Kolbens (77) bestimmenden Anschlag (88) innerhalb des Kolbenrohrs (37) angeordnet ist.

5. Kupplungsbetätigte Schaltsperre nach einem der vorangehenden Ansprüche, dadurch gekennzeichnet, daß das Schaltventil (17) über einen ersten Anschluß (75) mit einer Druckluftzuführung zur Schaltsperre, über einen zweiten Anschluß (51) mit einem Druckluftvorrat (21) und über einen dritten Anschluß (89) mit der Atmosphäre verbunden ist, daß ein innerhalb des Ventilgehäuses angeordneter Ventilteller (65) durch Federkraft unter Abdichtung gegenüber einem ortsfesten Ventilsitz (67) verspannbar ist, derart, daß die Druckmittelverbindung zwischen dem ersten Anschluß (75) und dem zweiten Anschluß (51) besteht, während die Entlüftung zwischen dem ersten Anschluß (75) und dem dritten Anschluß (89) unterbunden ist, daß der den Einlaßventilsitz (79) tragende, im Gehäuse des Schaltventils in Längsrichtung desselben verschiebbare Kolben (77) durch die Druckluft der Verbindung zwischen dem ersten Anschluß (75) und dem zweiten Anschluß (51) gegen die Kraft einer Feder (83) vom Ventilteller (65) abgehoben werden kann, daß der Kolben (77) bei Einkuppeln mittels der Stange (81) in dichtende Anlage an den Ventilteller (65) andrückbar ist, um die Druckluftverbindung zwischen dem ersten Anschluß (75) und dem zweiten Anschluß (51) zu sperren, und daß der Kolben (77) durch die ihn mitnehmende Stange um eine weitere Strecke bewegbar ist, um den Ventilteller (65) vom ortsfesten Ventilsitz (67) abzuheben, derart, daß der erste Anschluß (75) zum Zwecke der Entlüftung mit dem dritten Anschluß (89) verbunden ist, während die Druckluftverbindung zwischen dem ersten Anschluß (75) und dem zweiten Anschluß (51) gesperrt bleibt.

6. Kupplungsbetätigte Schaltsperre nach einem der vorangehenden Ansprüche, dadurch gekennzeichnet, daß der dritte Anschluß (89) als Entlüftungsanschluß für das Schaltventil (17) und gleichzeitig als Entlüftungsanschluß für den Kupplungskraftverstärker vorgesehen ist.

## Claims

1. A clutch-operated shift lock for fluid-operated manual transmissions (7), particularly for motor vehicles, comprising a clutch slave cylinder, preferably a clutch servo unit (15), acting in response to the actuation of a clutch pedal (25) for engaging and disengaging an input clutch (1) allocated to the fluidoperable manual transmission (7) and for engaging and disengaging a shift device which can be operated by the clutch servo unit (15) and which controls the supply of fluid to the shift lock as a function of the clutch in such a way that a gearshift is only possible when the clutch is fully disengaged, wherein the shift device consists of a shift valve (17) which is located in the axial projection of the piston rod (29) of the clutch servo unit (15), and wherein a frictionally engaged driver (81, 85) connects the piston rod (29) to the shift valve (17) in such a way that the shift valve controls the supply of fluid to the shift lock as a function of the movements of the piston rod (29).

2. A clutch-operated shift lock as defined in Claim 1, wherein the piston rod (29) is joined to a piston tube (37) which is located displaceably within the clutch servo unit and which is joined by means of the driver (85) to a rod (81) extending axially in the direction of the shift valve, and wherein the rod (81) acts on the shift valve (17) to control it as a function of the movements of the piston rod (29).

3. A clutch-operated shift lock as defined in Claim 1 or Claim 2, wherein the rod (81) extends in a seal through a chamber (hydraulic chamber (41)) of the clutch servo unit (15) communicating with a clutch master cylinder (27) and ends, at the end assigned to the piston rod (29), within the piston tube (37) sealed off from the hydraulic chamber (41), the driver (85) being designed as a slipper clutch joining the end to the inside of the piston tube (37), and wherein the opposite end of the rod (81), being aqually sealed off from the hydraulic chamber (41), acts on a piston (77) which moves an inlet valve seat (79) of the shift valve (17) to the open or closed position according to the displacement.

4. A clutch-operated shift lock as defined in Claim 3, wherein the driver (85), acting as a slack adjuster for clutch (1), is located inside the piston tube (37) between a stop (87) positioned at the end of the rod (81), and a further stop (88) determining the driving movement of the piston (77).

5. A clutch-operated shift lock as defined in one of the preceding claims, wherein the shift valve (17) cummunicates through a first connection (75) with a supply of compressed air to the shift lock, through a second connection (51) with a compressed air supply (21) and through a third connection (89) with atmosphere, wherein a valve head (65) located inside the valve body can be braced by spring force in a sealing action against a fixed valve seat (67), such that the fluid communicates between the first connection (75) and the second connection (51) whereas the exhaust between the first connection (75) and the third connection (89) is stopped, wherein the piston (77) which carries the inlet valve seat (79) and which can be displaced in the shift valve body in the valve's longitudinal direction can be lifted off the valve head (65) against the force of a spring (83) by the compressed air communication between the first connection (75) and the second connection (51), wherein the piston (77) can be pressed upon engagement by the rod (81) into sealing contact with the valve head (65) so as to stop the compressed air communication between the first connection (75) and the second connection (51), and wherein the piston (77) can be moved by its driving rod by a further amount to lift the valve head (65) off the fixed valve seat (67), such that the first connection (75) communicates with the third connection (89) for the purpose of exhausting whereas the compressed air communication between the first connection (75) and the second connection (51) is still shut off.

6. A clutch-operated shift lock as defined in one of the preceding Claims, wherein the third connection (89) is provided as an exhaust connection for the shift valve (17) and simultaneously as an exhaust connection for the clutch servo unit.

## Revendications

1. Dispositif de verrouillage commandé par l'embrayage pour une boîte de vitesses (7) commandée par un milieu sous pression, en particulier pour des véhicules automobiles, comportant un cylindre de commande hydraulique de l'embrayage agissant lors de la commande d'une pédale d'embrayage (25), de préférence un servodébrayeur (15) pour embrayer ou débrayer un embrayage d'entrée (1) associé à la boîte de vitesses (7) susceptible d'être commandée en fonction du milieu sous pression, ainsi qu'un dispositif de commutation capable d'être commandé par le servodébrayeur (15) et contrôlant de telle façon, en fonction de l'embrayage, l'alimentation en milieu sous pression du dispositif de verrouillage de manière qu'un changement de vitesse ne soit possible que lorsque l'embrayage est entièrement débrayé, caractérisé par le fait que le dispositif de commutation est constitué par une soupape de commutation (17) qui est disposée dans le prolongement axial de la tige de piston (29) du servo-débrayeur (15) et qu'un dispositif entraîner (81, 85), agissant par friction, relie la tige de piston (29) à la soupape de commutation (17) de manière que la soupape de commutation commande l'alimentation en milieu sous pression du dispositif de verrouillage, en fonction du déplacement de la tige de piston.

2. Dispositif de verrouillage commandé par un embrayage, selon la revendication 1, caractérisé par le fait que la tige de piston (29) est reliée à un piston tubulaire (37) qui est disposé, de façon à s'y déplacer, à l'intérieur du servo-débrayeur, lequel piston tubulaire est relié, à l'aide du dispositif entraîneur (85), avec une tige (81) qui s'étend axialement en direction de la soupape de commutation, et que la tige (81) agit, en fonction des déplacements de la tige de piston (29), sur la soupape de commutation (17) en vue de la commande de celle-ci.

3. Dispositif de verrouillage commandé par l'embrayage, selon la revendication 1 ou 2, caractérisé par le fait que la tige (81) s'étend, avec étanchéité, à travers une chambre (chambre hydraulique (41)) du servo-débrayeur (15), qui est reliée avec un cylindre manipulateur de l'embrayage (27), et se termine, avec l'extrémité qui est associée à la tige de piston (29), à l'intérieur du piston tubulaire (37) qui est rendu étance par rapport à la chambre hydraulique (41), le dispositif d'entraînement (85) étant réalisé sous la forme d'un accouplement à glissement qui relie l'extrémité avec le côté intérieur du piston tubulaire (37), et que l'extrémité opposée de la tige (81), également rendue étanche par rapport à la chambre hydraulique (41), agit sur un piston (77) déplaçant, en fonction de la course, un siège de soupape d'admission (79) de la soupape de commutation (17) dans la position ouverte ou fermée.

4. Dispositif de verrouillage commandé par l'embrayage, selon la revendication 3, caractérisé par le fait que le dispositif d'entraînement (85) est disposé à l'intérieur du piston tubulaire (37), en tant que dispositif de rattrapage des jeux de l'accouplement (1), entre une butée (87) qui est disposée à une extrémité de la tige (81) et une autre butée (88) qui détermine le mouvement d'entraînement du piston (77).

5. Dispositif de verrouillage commandé par l'embrayage selon l'une des revendications précédentes, caractérisé par le fait que la soupape de commutation (17) est reliée par l'intermédiairé d'un premier raccord (75) avec une alimentation en air comprimé menant au dispositif de verrouillage, par l'intermédiaire d'un second raccord (51) à une réserve d'air comprimé (21) et par l'intermédiaire d'un troisième raccord (89) avec l'atmosphère, qu'un plateau de soupape (65), disposé à l'intérieur du carter de soupape, est susceptible d'etre armé par une force élastique et avec étanchéité par rapport à un siège de soupape fixe (67) de manière que la liaison en milieu sous pression entre le premier raccord (75) et le second raccord (51) soit établie pendant que la mise à l'atmosphère entre le premier raccord (75) et le troissième raccord (89) est interdite, que le piston (77) qui porte le siège de soupape d'admission (79) et qui est déplacé dans le carter de la soupape de commutation, dans le sens longitudinal de celui-ci, peut être dégagé du plateau de soupape (65), à l'encontre de la force d'un ressort (83), par l'air comprimé de la liaison entre le premier raccord (75) et le second raccord (51), que le piston (77) est susceptible, lors du débrayage à l'aide de la tige (81), d'être amené en contact étanche contre le plateau de soupape (65), afin d'interdire la liaison en air comprimé entre le premier raccord (75) et le second raccord (51), et que le piston (77) est susceptible d'être déplacé, par la tige qui l'entraîne, sur une course supplémentaire en vue de soulever de telle manière le plateau de soupape (65) du siège de soupape fixe (67), que le premier raccord (75) est relié, en vue d'une mise à l'atmosphère, avec le troisième raccord (89), alors que la liaison pour l'air comprimé entre le premier raccord (75) et le second raccord (51) reste interdite.

6. Dispositif de verrouillage commandé par l'embrayage, selon l'une des revendications antérieures, caractérisé par le fait que le troisième raccord (89) est prévu en tant que raccord de mise à l'atmosphère pour la soupape de commutation (17) et en même temps en tant que raccord de mise à l'atmosphère pour le servo-débrayeur.

Fig. 1

0 030 349

0 030 349

Fig. 2

Fig. 3

0 030 349